# EUROPÄISCHE PATENTSCHRIFT

(11) **EP 2 255 610 B1**
(45) Veröffentlichungstag und Bekanntmachung des Hinweises auf die Patenterteilung: **05.06.2013**
(21) Anmeldenummer: 10159696.3
(22) Anmeldetag: 13.04.2010
(51) Int. Cl.: A01D 45/02

(54) **Vorsatzgerät zum Ernten stängelförmiger Pflanzen**
Header for harvesting stalk plants
Tête pour récolter des plantes en forme de tige

(30) Priorität: 28.05.2009 DE 102009022970
(43) Veröffentlichungstag der Anmeldung: 01.12.2010
(73) Patentinhaber: CLAAS Selbstfahrende Erntemaschinen GmbH, 33428 Harsewinkel (DE)
(72) Erfinder: Lütke-Harmann, Tim, 48324, Sendenhorst (DE); Fögeling, Walter, 33442, Herzebrock-Clarholz (DE); Aerdker, Bernhard, 48231, Warendorf (DE)

(56) Entgegenhaltungen:
- EP-A1- 1 767 085
- DE-A1- 19 734 747
- DE-A1-102005 021 792
- US-A- 3 707 833
- US-A- 5 921 070

## Beschreibung

Die Erfindung betrifft ein Vorsatzgerät zum Ernten stängelförmiger Pflanzen nach dem Oberbegriff des Anspruchs 1.

Aus der DE 197 34 747 ist ein gattungsgemäßes Maiserntevorsatzgerät zum Anbau an eine selbstfahrende Erntemaschine bekannt geworden, dessen reihenunabhängig arbeitendem Stängelmähwerk Pflückaggregate nachgeordnet sind, welche die Maiskolben von den Pflanzen trennen und einer gesonderten Verwertung zuführen. In einer Ausgestaltungsvariante sind die jeweils aus paarweise zusammenarbeitenden Pflückwalzen bestehenden Pflückaggregate dem jeweiligen Stängelmähwerk in der Weise nachgeordnet, dass sie sich im Wesentlichen quer zur Längsrichtung der selbstfahrenden Erntemaschine erstrecken. Die von dem Stängelmähwerk geernteten und in dessen rückwärtigen Bereich geförderten Pflanzenstängel werden von einem dem Stängelmähwerk in diesem Bereich zugeordneten, rotierend angetriebenen Ausräumelement erfasst und im Einzugsbereich der Pflückaggregate an diese übergeben. Damit die Stängel von dem Stängelmähwerk sicher erfasst und in den rückwärtigen Bereich gefördert werden können, weisen die Förderscheiben des Stängelmähwerks taschenförmige Aussparungen auf, in denen die Stängel gegen die Wirkung der Fliehkraft sicher gehalten werden. Diese aggressive Struktur der Fördertaschen führt jedoch dazu, dass die Rotationsgeschwindigkeiten des Stängelmähwerks und dem ihm jeweils nachgeordneten Ausräumelement präzise aufeinander abgestimmt sein müssen, damit die Stängel ohne Gutflussprobleme vom Stängelmähwerk an das jeweilige Pflückaggregat übergeben werden. Eine derartig beschaffene Steuerung ist aufwendig und kostenintensiv. Damit jede Schneid- und Förderscheiben zudem eine relativ große Arbeitsbreite aufweist, kommen Schneid- und Förderscheiben mit großem Durchmesser zum Einsatz. So beschaffene Schneid- und Förderscheiben haben zudem den Nachteil, dass sie große Erntegutmengen fördern müssen, was bei großen Erntegutdurchsätzen zu Gutförderproblemen führt, da die Abförderkapazität dann häufig geringer ist, als die für hohe Erntegutdurchsätze notwendig wäre.

Eine vereinfachte Gutförderung für derartige Vorsatzgeräte ist aus der DE 10 2005 021 792 bekannt geworden. Die dort beschriebenen Förderscheiben weisen V-förmige Aussparungen auf, die der Wirkung der Fliehkraft keinen Widerstand entgegensetzen, sodass zur Übergabe der Pflanzenstängel von den Schneid- und Förderorganen an die diesen ebenfalls quer zur Längsrichtung der landwirtschaftlichen Erntemaschine nachgeordneten Pflückaggregate keine Ausräumelemente erforderlich sind. Derartig beschaffene Stängelmähwerke weisen aber den Nachteil auf, dass die Pflanzenstängel auf ihrem Weg vom frontseitigen Erntebereich in den rückwärtigen Übergabebereich fliehkraftbedingt bestrebt sind, aus den Fördertaschen herauszutreten. Dies kann vorallem bei niedrigeren Erntegutdurchsätzen dazu führen, dass die Pflanzenstängel aus den Förderelementen herausgetreten sind, bevor sie von den Pflückaggregaten erfasst werden, was letztlich zu erheblichen Gutflussproblemen führt.

Es ist deshalb Aufgabe der Erfindung die beschriebenen Nachteile des Standes der Technik zu vermeiden und insbesondere ein Vorsatzgerät zum Ernten stängelförmiger Pflanzen vorzuschlagen, welches eine sichere Abförderung der Pflanzen aus dem frontseitigen Erntebereich und eine zuverlässige Übergabe der Pflanzenstängel an die nachgeordneten Pflückaggregate sicherstellt.

Diese Aufgabe wird erfindungsgemäß durch die kennzeichnenden Merkmale des Anspruchs 1 gelöst.

Indem das Vorsatzgerät zum Ernten stängeliger Pflanzen so beschaffen ist, dass die Pflanzenstängel von dem Einzugsorgan zum Pflückspalt in einem Führungskanal geführt werden und der Führungskanal im Bereich des Einzugsorgans von Mitnahmeelementen paarweise angeordneter und gegenläufig rotierender Einzugselemente und im Übergabebereich an das Pflückaggregat von Mitnahmeelementen zumindest eines rotierenden Übergabeelementes wenigstens teilweise überstrichen wird, wird sichergestellt, dass eine sichere Abförderung der Pflanzen aus dem frontseitigen Erntebereich und eine zuverlässige Übergabe der Pflanzenstängel an die nachgeordneten Pflückaggregate erfolgt.

Außerdem sind die Drehzahlen der Einzugselemente und des zumindest einen Übergabeelementes in Abhängigkeit von der Fahrgeschwindigkeit änderbar, sodass die Einzugsgeschwindigkeit des Vorsatzgerätes optimal an den Erntegutdurchsatz angepasst werden kann.

In einer vorteilhaften Ausgestaltung der Erfindung sind die Einzugselemente als Zinkensterne ausgebildet und die als Zinken ausgeführten Mitnahmeelemente weisen radial nach außen, sodass die rotierenden Einzugselemente allein fliehkraftbedingt die Erntegutstängel wieder freigeben und separate Ausräumelemente entbehrlich sind.

Zur Optimierung der Übergabe der Erntegutstängel von den Einzugselementen an die Pflückaggregate ist das zumindest eine Übergabeelement als Zinkenstern ausgebildet, wobei die als Zinken ausgeführten Mitnahmeelemente in Drehrichtung des Übergabeelementes nachlaufend ausgebildet sind. Dies hat den Effekt, dass die nachlaufenden Zinken die Erntegutstängel sicher in den Einlaufbereich der Pflückaggregate fördern und die Erntegutstängel in diesem Bereich ohne Gutstau von den nachlaufenden Zinken abfließen können.

Zur Reduzierung der Gutförderwege in dem Vorsatzgerät mündet in einer vorteilhaften Ausgestaltung der Erfindung der Führungskanal im Bereich des Pflückaggregates unmittelbar in einen Pflückkanal.

Damit auch entlang des Pflückkanals eine sichere Förderung der Erntegutstängel möglich wird, überstreichen die Mitnahmeelemente des wenigstens einen Übergabeelementes den Pflückkanal auf einem Teilbereich der Pflückkanallänge zumindest teilweise.

Eine konstruktiv besonders einfache Struktur und kostengünstige Umsetzung dieser Struktur ergibt sich dann, wenn die Einzugselemente und das zumindest eine Übergabeelement als Kettenräder ausgeführt sind.

Indem die Drehzahl des zumindest einen Übergabeelementes so einstellbar ist, dass die Pflanzen im Einlaufbereich des Pflückaggregates schräg gestellt und geneigt durch das Pflückaggregat gezogen werden ergibt sich der Effekt, dass die Erntegutstängel über der gesamten Länge des Pflückkanals durch die Pflückaggregate gezogen werden, ohne dass die Mitnahmeelemente des Übergabeelementes den gesamten Pflückkanal überstreichen müssen.

Eine kompakte und eine kurze Baulänge des Vorsatzgerätes ermöglichende Struktur des Vorsatzgerätes ergibt sich dann, wenn in einer vorteilhaften Ausgestaltung der Erfindung das Pflückaggregat von paarweise angeordneten und gegenläufig angetriebenen, quer zur Fahrtrichtung angeordneten Pflückwalzen gebildet wird, wobei die eine Pflückwalze der weiteren Pflückwalze in Fahrtrichtung nachgeordnet ist.

Eine wenige Bauteile umfassende, kompakte und damit kostengünstige Antriebsstrangstruktur für das Vorsatzgerät ergibt sich dann, wenn jeweils zwei Pflückwalzenpaare spiegelbildlich zueinander angeordnet sind und jedes Pflückwalzenpaar in einen separaten Führungskanal mündet.

In einer vorteilhaften Ausgestaltung der Erfindung sind über die Arbeitsbreite des Vorsatzgerätes eine Vielzahl von Pflückaggregaten und diesen vorgeordnete Einzugsorgane angeordnet, sodass das Vorsatzgerät auch für sehr große Arbeitsbreiten ausgelegt sein kann.

Um die Abförderung der Fruchtstände aus den Pflückaggregaten ohne zusätzliche Ausräumelement sicherzustellen, ist in einer vorteilhaften Ausgestaltung der Erfindung vorgesehen, dass die paarweise angeordneten vorderen und hinteren Pflückwalzen in vertikaler Richtung geneigt angeordnet sind, wobei die in Fahrtrichtung hintere Pflückwalze in vertikaler Richtung eine tiefere Position einnimmt. Dies hat den Effekt, dass die Fruchtstände allein durch die Wirkung der Schwerkraft aus dem Bereich der Pflückaggregate herausgefördert werden.

Eine weitere Optimierung der Antriebsstrangstruktur wird auch dadurch erreicht, dass in einer vorteilhaften Ausgestaltung der Erfindung die in Fahrtrichtung hinteren Pflückwalzen von einer durchgehenden Antriebswelle durchsetzt werden. Die Kompaktheit des Antriebsstanges lässt sich auch dadurch noch erhöhen, wenn in einer Weiterbildung der Erfindung die in Fahrtrichtung vorderen Pflückwalzen über Stirnradgetriebe mit der Antriebswelle der hinteren Pflückwalzen unmittelbar gekoppelt sind.

In einer vorteilhaften Ausgestaltung wird der Kompaktheitsgrad des Vorsatzgerätes auch dadurch noch gesteigert, dass den jeweils paarweise angeordneten Pflückwalzen obenseitig ein von paarweise angeordneten Pflückplatten begrenzter Pflückspalt zugeordnet ist, wobei die der in Fahrtrichtung hinteren Pflückwalze zugeordnete Pflückplatte um die Drehachse der hinteren Pflückwalze zur Einstellung der Pflückspaltweite verdrehbar ist. Dies hat insbesondere den Effekt, dass im Vergleich zur horizontalen Verschiebung der Pflückplatte für den Pflückplattenstellmechanismus weniger Bauraum zur Verfügung stehen muss.

Die Annahme der Erntegutstängel durch die Pflückaggregate wird auch dadurch noch erhöht, wenn die in Fahrrichtung hintere Pflückwalze länger als die ihr vorgeordnete vordere Pflückwalze ausgebildet ist, wobei jede der paarweise angeordneten Pflückwalzen im Einlaufbereich konisch ausgebildet ist. Dies hat vorallem den Effekt, dass die hintere Pflückwalze neben ihrer Pflückfunktion zugleich die Förderung der Erntegutstängel in den Einzugsbereich der Pflückaggregate unterstützt.

Um den Mähdrescher mit einem kompakten Erntegutstrom versorgen zu können ist in einer vorteilhaften Ausgestaltung der Erfindung vorgesehen, dass einer Vielzahl von Pflückaggregaten ein Querförderorgan mit mittiger Zusammenführung der Fruchtstände zugeordnet ist.

Je nach dem, ob die eine möglichst kurze Bauweise des Vorsatzgerätes umgesetzt werden soll oder die Förderung der Erntegutstängel in nahezu senkrechter, wenig Gutstau bewirkender Position sichergestellt werden soll, sind in einer vorteilhaften Weiterbildung der Erfindung das oder die Einzugsorgane und die ihm oder ihnen nachgeordneten Pflückaggregate in Fahrtrichtung geneigt oder horizontal ausgerichtet in dem Vorsatzgerät angeordnet.

Weitere vorteilhafte Ausgestaltungen sind Gegenstand weiterer Unteransprüche und werden nachfolgend an Hand in mehreren Figuren dargestellter Ausführungsbeispiele beschrieben. Es zeigen:
- Figur 1: eine Draufsicht auf das erfindungsgemäße Vorsatzgerät
- Figur 2: eine Detailansicht eines Einzugsorgans des erfindungsgemäßen Vorsatzgerätes
- Figur 3: eine schematische Seitenansicht des erfindungsgemäßen Vorsatzgerätes
- Figur 4: einen Abschnitt des Antriebsstranges des erfindungsgemäßen Vorsatzgerätes

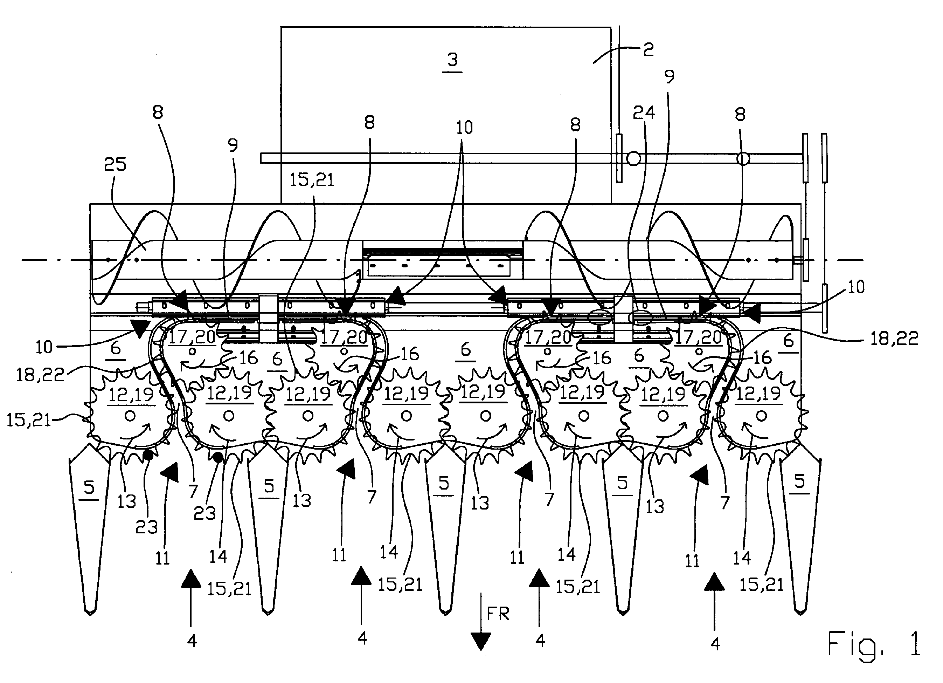

Figur 1 zeigt eine schematische Darstellung des erfindungsgemäßen Vorsatzgerätes 1 zum Ernten stängelförmiger Pflanzen, vorzugsweise Mais, welches in seinem rückwärtigen Bereich an den Schrägförderer 2 eines nicht näher dargestellten Mähdreschers 3 adaptiert ist. In seinem in Fahrtrichtung FR vorn liegenden Bereich nimmt das Vorsatzgerät 1 eine Vielzahl von Einzugsorganen 4 auf, die jeweils mittels vorausweisender, sogenannter Halmteiler 5 voneinander getrennt sind. Jedes Einzugsorgan 4 verfügt über einen von Abdeckplatten 6 eingefassten Führungskanal 7, der in einem rückwärtigen Übergabebereich 8 in den sich quer zur Fahrtrichtung FR erstreckenden Pflückkanal 9 mündet, welchem in noch näher zu beschreibender Weise untenseitig jeweils ein Pflückaggregate 10 zugeordnet ist.

Im Guteintrittsbereich 11 sind jedem Führungskanal 7 obenseitig paarweise angeordnete Einzugselemente 12 zugeordnet, die gemäß den Pfeilrichtungen 13, 14 gegenläufig rotierend angetrieben sind. Jedem Einzugselement 12 sind an seinem Umfang radial nach außen weisende Mitnahmeelemente 15 angeformt, die den Führungskanal 7 bei Drehung der Einzugselemente 12 wenigstens teilwiese überstreichen. Den paarweise angeordneten Einzugselementen 12 ist im Übergabebereich 8 an das jeweilige Pflückaggregat 10 zumindest ein gemäß Pfeilrichtung 16 umlaufendes Übergabeelement 17 nachgeordnet, dessen Mitnahmeelemente 18 den Führungskanal 7 ebenfalls wenigstens teilweise überstreichen. Sowohl die Einzugselemente 12 als auch das Übergabeelement 17 sind als Zinkensterne 19, 20, im einfachsten Fall als Kettenräder, ausgebildet. Zur Verbesserung der Gutannahme und Gutabgabe sind die als Zinken 21 ausgeführten Mitnahmeelemente 15 der als Zinkensterne 19 gestalteten Einzugselemente 12 radial nach außen weisend ausgebildet. Damit das Übergabeelement 17 eine sichere Übergabe der Pflanzenstängel an das jeweilige Pflückaggregat 10 gewährleistet sind die als Zinken 22 ausgeführten Mitnahmeelemente 18 der ebenfalls als Zinkensterne 20 gestalteten Übergabeelemente 17 in Drehrichtung des Übergabeelementes 17 nachlaufend gestaltet. Jedes Übergabeelement 17 ist zudem so in dem Übergabebereich 8 positioniert, dass seine Mitnahmeelemente 18 den Pflückkanal 9 auf einem Teilbereich seiner Länge zumindest teilweise überstreichen.

Im Erntebetrieb erfassen die Mitnahmeelemente 15 der Einzugselemente 12 den oder die Pflanzenstängel 23 und ziehen diese in den jeweiligen Führungskanal 7, während die Wurzel des jeweiligen Pflanzenstängels 23 weiterhin im Boden verankert ist. Durch die Vorwärtsbewegung des Vorsatzgerätes 1 gemäß Pfeilrichtung FR beschränkt sich die Verformung des Pflanzenstängels 23 auf die quer zur Fahrtrichtung FR gerichtete Förderung des Pflanzenstängels 23. Unabhängig davon, ob die Einzugselemente 12 und das jeweilige Übergabeelement 17 mechanisch, hydraulisch oder elektrisch angetrieben sind, kann die Drehzahl aller Einzugs- und Übergabeelemente 12, 17 an die Fahrgeschwindigkeit des Mähdreschers 3 gekoppelt sein, sodass bei hohen Fahrgeschwindigkeiten höhere Drehzahlen und bei niedrigeren Fahrgeschwindigkeiten niedrigere Drehzahlen eingestellt werden, sodass der Abfördereffekt an den zu erwartenden Erntegutdurchsatz angepasst werden kann. Da das Übergabeelement 17 zudem mit den Pflückaggregaten 10 zusammenarbeitet, kann dessen Drehzahleinstellung auch dazu herangezogen werden, dass ein im Vergleich zur Durchzugsgeschwindigkeit der Pflanzenstängel 23 durch das jeweilige Pflückaggregat 10 intensiverer Fördereffekt der Pflanzenstängel 23 in Längsrichtung des Pflückkanals 9 bewirkt wird. Dies hat den Effekt, dass die Pflanzenstängel 23 in Längsrichtung des Pflückkanals 9 geneigt werden, was letztlich dazu führt, dass der Pflanzenstängel 23 über der gesamten Länge des Pflückkanals 9 in die Pflückaggregate 10 eintaucht, ohne dass die Pflückaggregate 10 selbst eine Bewegung der Pflanzenstängel 23 längs des Pflückkanals 9 bewirken müssen. Während die Pflanzenstängel 23 die noch näher zu beschreibenden Pflückaggregate 10 durchlaufen, werden die Fruchtstände 24 oberhalb des jeweiligen Pflückkanals 9 zurückgehalten und in noch näher zu beschreibender Weise an ein den Pflückaggregaten 10 nachgeordnetes Querförderorgan 25 übergeben, welches die Fruchtstände 24 in der Mitte des Vorsatzgerätes 1 zusammenführt und in das Schrägförderorgan 2 des Mähdreschers 3 fördert.

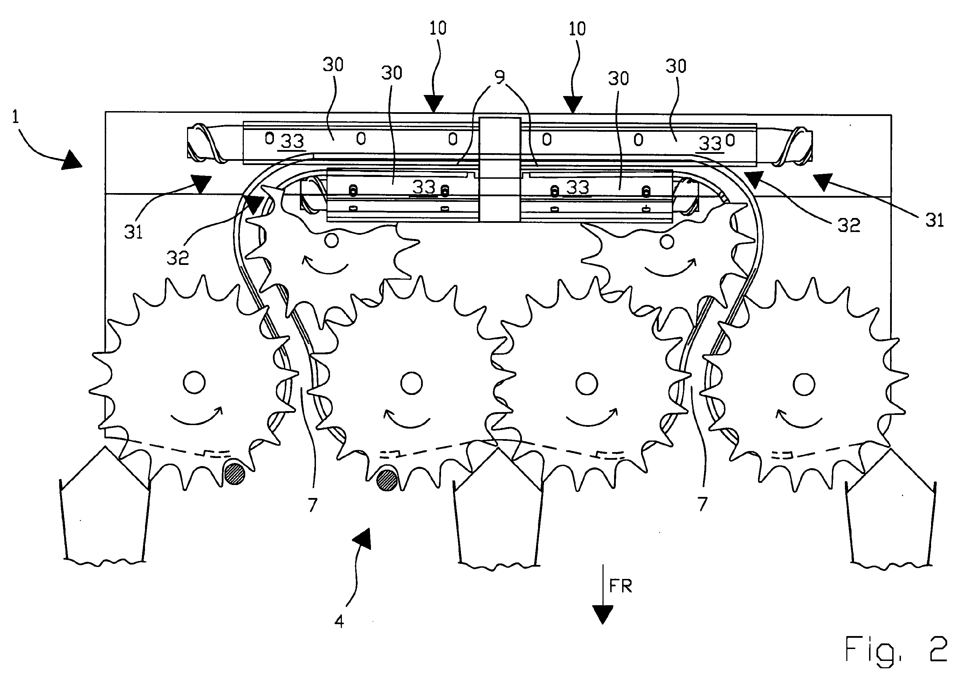

Figur 2 zeigt eine Detailansicht der den Einzugsorganen 4 nachgeordneten Pflückaggregate 10. Jedes Pflückaggregat 10 wird von paarweise angeordneten und gegenläufig angetriebenen Pflückwalzen 30 gebildet, wobei die eine Pflückwalze 30 der weiteren Pflückwalze 30 in Fahrtrichtung nachgeordnet ist. Im dargestellten Ausführungsbeispiel sind jeweils zwei Pflückwalzenpaare 31 spiegelbildlich zueinander angeordnet und jedes Pflückwalzenpaar 31 mündet in einen separaten Führungskanal 7. Es liegt im Rahmen der Erfindung, dass über die Arbeitsbreite des Vorsatzgerätes 1 eine Vielzahl von Pflückaggregaten 10 und diesen vorgeordnete Einzugsorgane 4 angeordnet sind. Zudem ist die jeweils in Fahrrichtung FR hintere Pflückwalze 30 länger als die ihr vorgeordnete vordere Pflückwalze 30 ausgebildet, wobei jede der paarweise angeordneten Pflückwalzen 30 im Einlaufbereich 32 konisch ausgebildet ist. Der bereits beschriebene Pflückkanal 9 wird durch paarweise angeordnete Pflückplatten 33 gebildet, die den ebenfalls paarweise angeordneten Pflückwalzen 30 obenseitig zugeordnet sind.

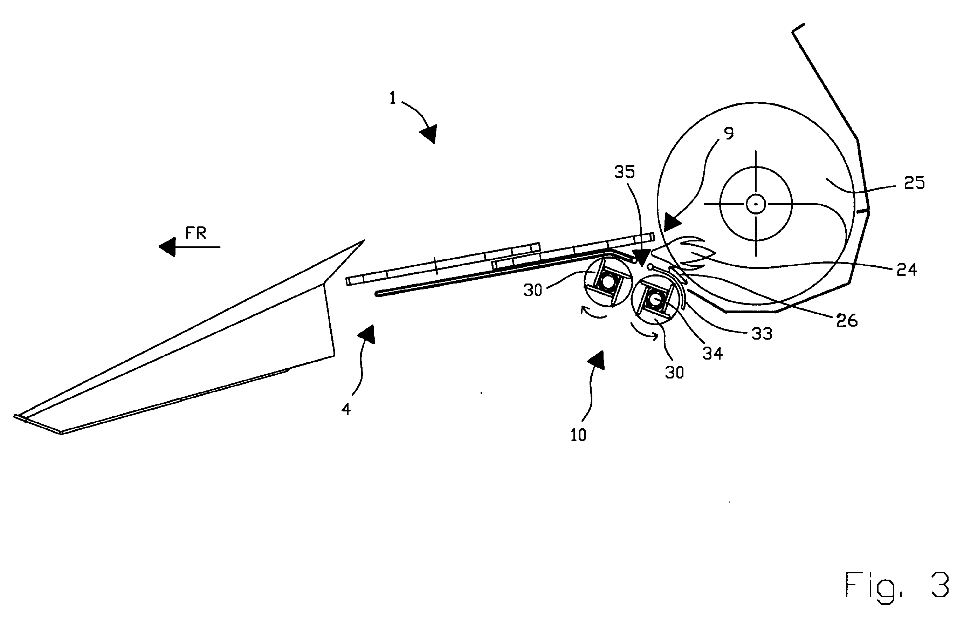

Aus der schematischen Seitenansicht des Vorsatzgerätes 1 gemäß Figur 3 ergibt sich, dass die der in Fahrtrichtung FR hinteren Pflückwalze 30 zugeordnete Pflückplatte 33 um die Drehachse 34 der hinteren Pflückwalze 30 zur Einstellung der Pflückspaltweite 35 gemäß Pfeilrichtung 26 verdrehbar ist. Weiter sind die jeweils paarweise angeordneten vorderen und hinteren Pflückwalzen 30 in vertikaler Richtung geneigt angeordnet, wobei die in Fahrtrichtung FR hintere Pflückwalze 30 in vertikaler Richtung eine tiefere Position einnimmt, sodass die am Pflückkanal 9 abgeschiedenen Fruchtstände 24 schwerkraftbedingt an das nachgeordnete Querförderorgan 25 übergeben werden. Zudem ist aus Figur 3 ersichtlich, dass das oder die Einzugsorgane 4 und die ihm oder ihnen nachgeordneten Pflückaggregate 10 in Fahrtrichtung FR geneigt angeordnet sind. Es liegt im Rahmen der Erfindung, dass die Einzugsorgane 4 und die ihnen nachgeordneten Pflückaggregate 10 in nicht dargestellter Weise auch horizontal angeordnet sein können.

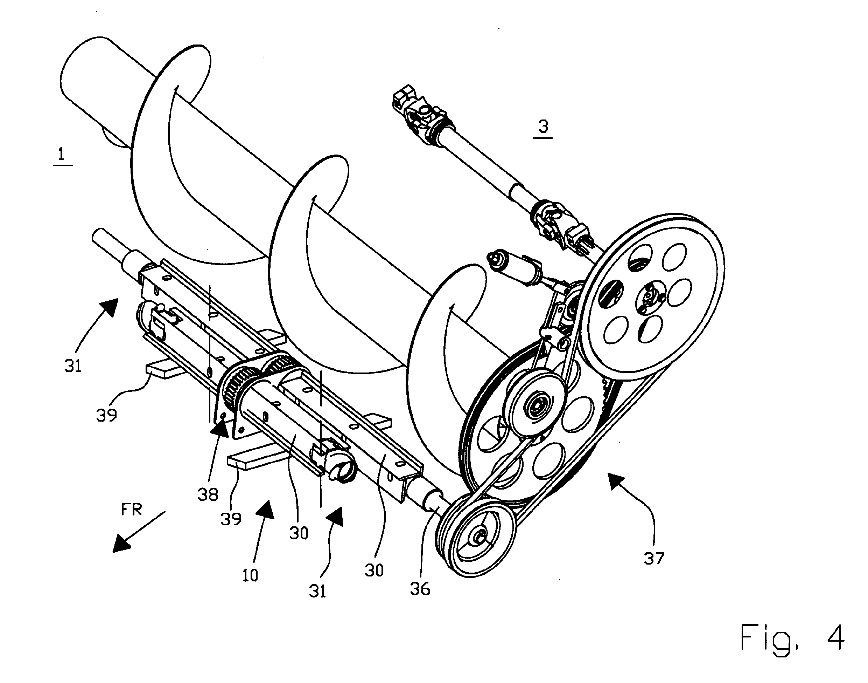

Aus Figur 4 ergibt sich schließlich die Antriebsstruktur der Pflückaggregate 10. Die in Fahrtrichtung FR hinteren Pflückwalzen 30 werden von einer durchgehenden Antriebswelle 36 durchsetzt. Die Antriebswelle 36 wird einenends in an sich bekannter Weise über einen Antriebsstrang 37 von dem das Vorsatzgerät 1 aufnehmenden Mähdrescher 3 angetrieben. Die jeweils in Fahrtrichtung FR vorderen Pflückwalzen 30 sind schließlich über ein Stirnradgetriebe 38 mit der Antriebswelle 36 der hinteren Pflückwalzen 30 gekoppelt, wobei bei spiegelbildlicher Anordnung der Pflückaggregate 10 ein einziges Stirnradgetriebe 38 für beide Pflückwalzenpaare 31 vorgesehen ist. Damit die von den Pflückaggregaten 10 untenseitig abgeschiedenen Pflanzenstängel optimal verrotten, können den Pflückaggregaten 10 in an sich bekannter Weise untenseitig umlaufende Stängelhäcksler 39 zugeordent sein.

### Bezugszeichenliste:

- 1: Vorsatzgerät
- 2: Schrägförderer
- 3: Mähdrescher
- 4: Einzugsorgan
- 5: Halmteiler
- 6: Abdeckplatte
- 7: Führungskanal
- 8: Übergabebereich
- 9: Pflückkanal
- 10: Pflückaggregat
- 11: Guteintrittsöffnung
- 12: Einzugselement
- 13: Pfeilrichtung
- 14: Pfeilrichtung
- 15: Mitnahmeelement
- 16: Pfeilrichtung
- 17: Übergabeelement
- 18: Mitnahmeelement
- 19: Zinkenstern
- 20: Zinkenstern
- 21: Zinken
- 22: Zinken
- 23: Pflanzenstängel
- 24: Fruchtstände
- 25: Querförderorgan
- 26: Pfeilrichtung
- 30: Pflückwalze

- 31: Pflückwalzenpaar
- 32: Einlaufbereich
- 33: Pflückplatte
- 34: Drehachse
- 35: Pflückspaltweite
- 36: Antriebswelle
- 37: Antriebsstrang
- 38: Stirnradgetriebe
- 39: Stängelhäcksler

- FR: Fahrtrichtung

## Patentansprüche

1. Vorsatzgerät (1) zum Ernten stängelförmiger Pflanzen (23) mit einem reihenunabhängig arbeitenden Einzugsorgan (4) und diesem quer zur Fahrtrichtung nachgeordneten Pflückaggregat (10), welches die Fruchtstände (24) von den stängelförmigen Pflanzen trennt und einer gesonderten Verwertung zuführt, in dem
die Pflanzenstängel (23) von dem Einzugsorgan (4) zu einem Pflückkanal (9) in einem Führungskanal (7) geführt werden, **dadurch gekennzeichnet, dass** der Führungskanal (7) im Bereich des Einzugsorgans (4) von Mitnahmeelementen (15) paarweise angeordneter und gegenläufig rotierender Einzugselemente (12) und in einem Übergabebereich (8) an das Pflückaggregat (10) von Mitnahmeelementen (18) zumindest eines rotierenden Übergabeelementes (17) wenigstens teilweise überstrichen wird, wobei die Drehzahlen der Einzugselemente (12) und des zumindest einen Übergabeelementes (17) in Abhängigkeit von der Fahrgeschwindigkeit änderbar sind.

2. Vorsatzgerät zum Ernten stängelförmiger Pflanzen mit einem reihenunabhängig arbeitenden Einzugsorgan nach Anspruch 1,
**dadurch gekennzeichnet,**
**dass** die Einzugselemente (12) als Zinkensterne (19) ausgebildet sind und die als Zinken (21) ausgeführten Mitnahmeelemente (15) radial nach außen weisen.

3. Vorsatzgerät zum Ernten stängelförmiger Pflanzen mit einem reihenunabhängig arbeitenden Einzugsorgan nach Anspruch 1,
**dadurch gekennzeichnet,**
**dass** das zumindest eine Übergabeelement (17) als Zinkenstern (20) ausgebildet ist und die als Zinken (22) ausgeführten Mitnahmeelemente (18) in Drehrichtung des Übergabeelementes (17) nachlaufend ausgebildet sind.

4. Vorsatzgerät zum Ernten stängelförmiger Pflanzen mit einem reihenunabhängig arbeitenden Einzugsorgan nach einem der vorhergehenden Ansprüche,
**dadurch gekennzeichnet,**
**dass** der Führungskanal (7) im Bereich des Pflückaggregates (10) in einen Pflückkanal (9) mündet.

5. Vorsatzgerät zum Ernten stängelförmiger Pflanzen mit einem reihenunabhängig arbeitenden Einzugsorgan nach den Ansprüchen 3 und 4,
**dadurch gekennzeichnet,**
**dass** die Mitnahmeelemente (18) des wenigstens einen Übergabeelementes (17) den Pflückkanal (9) auf einem Teilbereich der Pflückkanallänge zumindest teilweise überstreichen.

6. Vorsatzgerät zum Ernten stängelförmiger Pflanzen mit einem reihenunabhängig arbeitenden Einzugsorgan nach einem der vorhergehenden Ansprüche,
**dadurch gekennzeichnet,**
**dass** die Einzugselemente (12) und das zumindest eine Übergabeelement (17) als Kettenräder ausgeführt sind.

7. Vorsatzgerät zum Ernten stängelförmiger Pflanzen mit einem reihenunabhängig arbeitenden Einzugsorgan nach einem der Ansprüche 1 bis 6,
**dadurch gekennzeichnet,**
**dass** die Drehzahl des zumindest einen Übergabeelementes (17) so einstellbar ist, dass die Pflanzenstängel (23) im Einlaufbereich des Pflückaggregates (10) schräg gestellt und geneigt durch das Pflückaggregat (10) gezogen werden.

8. Vorsatzgerät zum Ernten stängelförmiger Pflanzen mit einem reihenunabhängig arbeitenden Einzugsorgan nach einem der vorhergehenden Ansprüche,
**dadurch gekennzeichnet,**
**dass** das Pflückaggregat (10) von paarweise angeordneten und gegenläufig angetriebenen, quer zur Fahrtrichtung (FR) angeordneten Pflückwalzen (30) gebildet wird, wobei die eine Pflückwalze (30) der weiteren Pflückwalze (30) in Fahrtrichtung (FR) nachgeordnet ist.

9. Vorsatzgerät zum Ernten stängelförmiger Pflanzen mit einem reihenunabhängig arbeitenden Einzugsorgan nach Anspruch 8,
**dadurch gekennzeichnet,**
**dass** jeweils zwei Pflückwalzenpaare (31) spiegelbildlich zueinander angeordnet sind und jedes Pflückwalzenpaar (31) in einen separaten Führungskanal (7) mündet.

10. Vorsatzgerät zum Ernten stängelförmiger Pflanzen mit einem reihenunabhängig arbeitenden Einzugsorgan nach einem der Ansprüche 8 und 9,
**dadurch gekennzeichnet,**
**dass** über die Arbeitsbreite des Vorsatzgerätes (1) eine Vielzahl von Pflückaggregaten (10) und diesen vorgeordnete Einzugsorgane (4) angeordnet sind.

11. Vorsatzgerät zum Ernten stängelförmiger Pflanzen mit einem reihenunabhängig arbeitenden Einzugsorgan nach einem der Ansprüche 8 bis 10,
**dadurch gekennzeichnet,**
**dass** die paarweise angeordneten vorderen und hinteren Pflückwalzen (30) in vertikaler Richtung geneigt angeordnet sind, wobei die in Fahrtrichtung (FR) hintere Pflückwalze (30) in vertikaler Richtung eine tiefere Position einnimmt.

12. Vorsatzgerät zum Ernten stängelförmiger Pflanzen mit einem reihenunabhängig arbeitenden Einzugsorgan nach einem der Ansprüche 8 bis 11,
**dadurch gekennzeichnet,**
**dass** die in Fahrtrichtung (FR) hinteren Pflückwalzen (30) von einer durchgehenden Antriebswelle (36) durchsetzt werden.

13. Vorsatzgerät zum Ernten stängelförmiger Pflanzen mit einem reihenunabhängig arbeitenden Einzugsorgan nach Anspruch 12,
**dadurch gekennzeichnet,**
**dass** die in Fahrtrichtung (FR) vorderen Pflückwalzen (30) über Stirnradgetriebe (38) mit der Antriebswelle (36) der hinteren Pflückwalzen (30) gekoppelt sind.

14. Vorsatzgerät zum Ernten stängelförmiger Pflanzen mit einem reihenunabhängig arbeitenden Einzugsorgan nach einem der Ansprüche 8-13,
**dadurch gekennzeichnet,**
**dass** den jeweils paarweise angeordneten Pflückwalzen (30) obenseitig ein von paarweise angeordneten Pflückplatten (33) begrenzter Pflückkanal (9) zugeordnet ist, wobei die der in Fahrtrichtung (FR) hinteren Pflückwalze (30) zugeordnete Pflückplatte (33) um die Drehachse (34) der hinteren Pflückwalze (30) zur Einstellung der Pflückspaltweite (35) verdrehbar ist.

15. Vorsatzgerät zum Ernten stängelförmiger Pflanzen mit einem reihenunabhängig arbeitenden Einzugsorgan nach einem der Ansprüche 8 bis 14,
**dadurch gekennzeichnet,**
**dass** die in Fahrrichtung (FR) hintere Pflückwalze (30) länger als die ihr vorgeordnete vordere Pflückwalze (30) ausgebildet ist, wobei jede der paarweise angeordneten Pflückwalzen (30) im Einlaufbereich konisch ausgebildet ist.

16. Vorsatzgerät zum Ernten stängelförmiger Pflanzen mit einem reihenunabhängig arbeitenden Einzugsorgan nach einem der vorhergehenden Ansprüche,
**dadurch gekennzeichnet,**
**dass** einer Vielzahl von Pflückaggregaten (10) ein Querförderorgan (25) mit mittiger Zusammenführung der Fruchtstände (24) zugeordnet ist.

17. Vorsatzgerät zum Ernten stängelförmiger Pflanzen mit einem reihenunabhängig arbeitenden Einzugsorgan nach einem der vorhergehenden Ansprüche,
**dadurch gekennzeichnet,**
**dass** das oder die Einzugsorgane (4) und die ihm oder ihnen nachgeordneten Pflückaggregate (10) horizontal oder in Fahrtrichtung (FR) geneigt angeordnet sind.

## Claims

1. A front-mounted attachment (1) for harvesting stalked plants (23) comprising an intake member (4) which operates independently of rows and a picking assembly (10) which is arranged downstream thereof transversely relative to the direction of travel and which separates the fruit heads (24) from the stalked plants and feeds them for separate utilisation, in which the plant stalks (23) are guided by the intake member (4) to a picking passage (9) in a guide passage (7), **characterised in that** the guide passage (7) is at least partially swept over in the region of the intake member (4) by entrainment elements (15) of intake elements (12) which are arranged in pairs and which rotate in opposite relationship and in a transfer region (8) to the picking assembly (10) by entrainment elements (18) of at least one rotating transfer element (17), wherein the speeds of rotation of the intake elements (12) and the at least one transfer element (17) can be changed in dependence on the speed of travel.

2. A front-mounted attachment for harvesting stalked plants comprising an intake member which operates independently of rows according to claim 1 **characterised in that** the intake elements (12) are in the form of tine stars (19) and the entrainment elements (15) which are in the form of tines (21) face radially outwardly.

3. A front-mounted attachment for harvesting stalked plants comprising an intake member which operates independently of rows according to claim 1 **characterised in that** the at least one transfer element (17) is in the form of a tine star (20) and the entrainment elements (18) which are in the form of tines (22) are arranged in trailing relationship in the direction of rotation of the transfer element (17).

4. A front-mounted attachment for harvesting stalked plants comprising an intake member which operates independently of rows according to one of the preceding claims **characterised in that** the guide passage (7) opens into a picking passage (9) in the region of the picking assembly (10).

5. A front-mounted attachment for harvesting stalked plants comprising an intake member which operates independently of rows according to claims 3 and 4 **characterised in that** the entrainment elements (18) of the at least one transfer element (17) at least partially sweep over the picking passage (9) on a partial region of the picking passage length.

6. A front-mounted attachment for harvesting stalked plants comprising an intake member which operates independently of rows according to one of the preceding claims **characterised in that** the intake elements (12) and the at least one transfer element (17) are in the form of chain wheels.

7. A front-mounted attachment for harvesting stalked plants comprising an intake member which operates independently of rows according to one of claims 1 to 6 **characterised in that** the rotary speed of the at least one transfer element (17) is so adjustable that the plant stalks (23) are inclined in the entry region of the picking assembly (10) and are pulled inclinedly by the picking assembly (10).

8. A front-mounted attachment for harvesting stalked plants comprising an intake member which operates independently of rows according to one of the preceding claims **characterised in that** the picking assembly (10) is formed by picking rollers (30) which are arranged in pairs and which are driven in opposite relationship and which are arranged transversely relative to the direction of travel (FR), wherein the one picking roller (30) is arranged downstream of the further picking rollers (30) in the direction of travel (FR).

9. A front-mounted attachment for harvesting stalked plants comprising an intake member which operates independently of rows according to claim 8 **characterised in that** two pairs of picking rollers (31) are respectively arranged in mirror image relationship with each other and each pair of picking rollers (31) opens into a separate guide passage (7).

10. A front-mounted attachment for harvesting stalked plants comprising an intake member which operates independently of rows according to one of claims 8 and 9 **characterised in that** a multiplicity of picking assemblies (10) and intake members (4) arranged upstream thereof are arranged over the working width of the front-mounted attachment (1).

11. A front-mounted attachment for harvesting stalked plants comprising an intake member which operates independently of rows according to one of claims 8 to 10 **characterised in that** the front and rear picking rollers (30) arranged in pairs are arranged inclinedly in the vertical direction, wherein the picking roller (30) which is rearward in the direction of travel (FR) assumes a lower position in the vertical direction.

12. A front-mounted attachment for harvesting stalked plants comprising an intake member which operates independently of rows according to one of claims 8 to 11 **characterised in that** the picking rollers (30) which are at the rear in the travel direction (FR) have a continuous drive shaft (36) passing therethrough.

13. A front-mounted attachment for harvesting stalked plants comprising an intake member which operates independently of rows according to claim 12 **characterised in that** the picking rollers (30) which are at the front in the direction of travel (FR) are coupled by way of spur gear transmissions (38) to the drive shaft (36) of the rear picking rollers (30).

14. A front-mounted attachment for harvesting stalked plants comprising an intake member which operates independently of rows according to one of claims 8 to 13 **characterised in that** a picking passage (9) delimited by picking plates (33) arranged in pairs is associated with the picking rollers (30) which are respectively arranged in pairs at the top side, wherein the picking plate (33) associated with the picking roller (30) which is at the rear in the direction of travel (FR) can be rotated about the axis of rotation (34) of the rear picking roller (30) for adjusting the picking gap width (35).

15. A front-mounted attachment for harvesting stalked plants comprising an intake member which operates independently of rows according to one of claims 8 to 14 **characterised in that** the picking roller (30) which is at the rear in the direction of travel (FR) is longer than the front picking roller (30) arranged upstream thereof, wherein each of the picking rollers (30) arranged in pairs is of a conical configuration in the intake region.

16. A front-mounted attachment for harvesting stalked plants comprising an intake member which operates independently of rows according to one of the preceding claims **characterised in that** a transverse conveyor member (25) with central convergence of the fruit heads (24) is associated with a plurality of picking assemblies (10).

17. A front-mounted attachment for harvesting stalked plants comprising an intake member which operates independently of rows according to one of the preceding claims **characterised in that** the intake member or members (4) and the picking assemblies (10) arranged downstream thereof are arranged horizontally or inclinedly in the direction of travel (FR).

## Revendications

1. Tête (1) pour récolter des plantes (23) en forme de tiges dotée d'un organe d'admission (4) fonctionnant indépendamment des rangs, et d'une unité de cueillage (10) disposée à la suite de celui-ci transversalement par rapport au sens de la marche, laquelle sépare les infrutescences (24) d'avec les plantes en forme de tiges et conduit à une utilisation séparée, dans laquelle les tiges des plantes (23) sont conduites de l'organe d'admission (4) vers un canal de cueillage (9) dans un canal de guidage (7), **caractérisée en ce que** le canal de guidage (7) dans la zone de l'organe d'admission (4) est au moins partiellement recouvert d'éléments d'entraînement (15) d'éléments d'admission (12) disposés par paires et tournant dans des sens opposés et dans une zone de transmission (8) sur l'unité de cueillage (10), d'éléments d'entraînement (18) d'au moins un élément de transmission tournant (17), les vitesses de rotation des éléments d'admission (12) et dudit au moins un élément de transmission (17) peuvent être modifiées en fonction de la vitesse de marche.

2. Tête pour récolter des plantes en forme de tiges dotée d'un organe d'admission fonctionnant indépendamment des rangs, selon la revendication 1, **caractérisée en ce que** les éléments d'admission (12) se présentent sous la forme de dents disposées en étoiles (19) et les éléments d'entraînement (15) se présentant sous forme de dents (21) sont orientés radialement vers l'extérieur.

3. Tête pour récolter des plantes en forme de tiges dotée d'un organe d'admission fonctionnant indépendamment des rangs, selon la revendication 1, **caractérisée en ce que** ledit au moins un élément de transmission (17) se présente sous la forme de dents disposées en étoiles (20) et les éléments d'entraînement (18) se présentant sous forme de dents (22) sont formés en aval dans la direction de rotation de l'élément de transmission (17).

4. Tête pour récolter des plantes en forme de tiges dotée d'un organe d'admission fonctionnant indépendamment des rangs, selon l'une des revendications précédentes, **caractérisée en ce que** le canal de guidage (7) dans la zone de l'unité de cueillage (10) débouche dans un canal de cueillage (9).

5. Tête pour récolter des plantes en forme de tiges dotée d'un organe d'admission fonctionnant indépendamment des rangs, selon l'une des revendications 3 et 4, **caractérisée en ce que** les éléments d'entraînement (18) dudit au moins un élément de transmission (17) recouvrent au moins partiellement le canal de cueillage (9) sur une zone partielle de la longueur de canal de cueillage.

6. Tête pour récolter des plantes en forme de tiges dotée d'un organe d'admission fonctionnant indépendamment des rangs, selon l'une des revendications précédentes, **caractérisée en ce que** les éléments d'admission (12) et ledit au moins un élément de transmission (17) se présentent sous la forme de roues dentées.

7. Tête pour récolter des plantes en forme de tiges dotée d'un organe d'admission fonctionnant indépendamment des rangs, selon l'une des revendications 1 à 6, **caractérisée en ce que** la vitesse de rotation dudit au moins un élément de transmission (17) est ajustable de sorte que les tiges (23) de plantes dans la zone d'admission de l'unité de cueillage (10) sont tirées, disposées obliquement et inclinées, par l'unité de cueillage (10).

8. Tête pour récolter des plantes en forme de tiges dotée d'un organe d'admission fonctionnant indépendamment des rangs, selon l'une des revendications précédentes, **caractérisée en ce que** l'unité de cueillage (10) est formée par des cylindres de cueillage (30) disposés par paires, entraînés dans des sens opposés et disposés transversalement par rapport au sens de la marche (FR), l'un des cylindres de cueillage (30) étant disposé à la suite de l'autre cylindre de cueillage (30) dans le sens de la marche (FR).

9. Tête pour récolter des plantes en forme de tiges dotée d'un organe d'admission fonctionnant indépendamment des rangs, selon la revendication 8, **caractérisée en ce que** deux paires respectives (31) de cylindres de cueillage sont disposées l'une par rapport à l'autre selon une image en miroir et chaque paire (31) de cylindres de cueillage débouche dans un canal de guidage (7) séparé.

10. Tête pour récolter des plantes en forme de tiges dotée d'un organe d'admission fonctionnant indépendamment des rangs, selon l'une des revendications 8 et 9, **caractérisée en ce qu'**une pluralité d'unités de cueillage (10) et des organes d'admission (4) en amont de celles-ci sont disposés sur la largeur de travail de la tête (1).

11. Tête pour récolter des plantes en forme de tiges dotée d'un organe d'admission fonctionnant indépendamment des rangs, selon l'une des revendications 8 à 10, **caractérisée en ce que** les cylindres de cueillage (30) avant et arrière, disposés par paires, sont disposés de façon inclinée dans la direction verticale, le cylindre de cueillage (30) arrière dans le sens de la marche (FR) occupant une position plus basse dans la direction verticale.

12. Tête pour récolter des plantes en forme de tiges dotée d'un organe d'admission fonctionnant indépendamment des rangs, selon l'une des revendications 8 à 11, **caractérisée en ce que** les cylindres de cueillage (30) arrière dans le sens de la marche (FR) sont traversés par un arbre d'entraînement (36) traversant.

13. Tête pour récolter des plantes en forme de tiges dotée d'un organe d'admission fonctionnant indépendamment des rangs, selon la revendication 12, **caractérisée en ce que** les cylindres de cueillage (30) avant dans le sens de la marche (FR) sont accouplés à l'arbre d'entraînement (36) des cylindres de cueillage arrière (30) par l'intermédiaire d'un engrenage (38) cylindrique.

14. Tête pour récolter des plantes en forme de tiges dotée d'un organe d'admission fonctionnant indépendamment des rangs, selon l'une des revendications 8 à 13, **caractérisée en ce qu'**un canal de cueillage (9) délimité par des plaques de cueillage (33) disposées par paires est associé, dans la partie supérieure, aux cylindres de cueillage (30) respectivement disposés par paires, la plaque de cueillage (33) associée au cylindre de cueillage arrière (30) dans le sens de la marche (FR) pouvant être tournée autour de l'axe de rotation (34) du cylindre de cueillage arrière (30) pour ajuster la largeur de fente de cueillage (35).

15. Tête pour récolter des plantes en forme de tiges dotée d'un organe d'admission fonctionnant indépendamment des rangs, selon l'une des revendications 8 à 14, **caractérisée en ce que** le cylindre de cueillage arrière (30) dans le sens de la marche (FR) est formé de façon à être plus long que le cylindre de cueillage avant (30) qui le précède, chacun des cylindres de cueillage (30) disposés par paires étant formé de façon conique dans la zone d'admission.

16. Tête pour récolter des plantes en forme tiges dotée d'un organe d'admission fonctionnant indépendamment des rangs, selon l'une des revendications précédentes, **caractérisée en ce qu'**un organe de transport transversal (25) avec regroupement central des infrutescences (24) est associé à une pluralité d'unités de cueillage (10).

17. Tête pour récolter des plantes en forme tiges dotée d'un organe d'admission fonctionnant indépendamment des rangs, selon l'une des revendications précédentes, **caractérisée en ce que** le ou les organes d'admission (4) et les unités de cueillage (10) disposées à la suite de celui-ci ou de ceux-ci sont disposés horizontalement ou de façon inclinée dans le sens de la marche (FR).
